# EUROPÄISCHE PATENTSCHRIFT

(11) **EP 1 363 796 B1**
(45) Veröffentlichungstag und Bekanntmachung des Hinweises auf die Patenterteilung: **10.11.2004**
(21) Anmeldenummer: 02708328.6
(22) Anmeldetag: 20.02.2002
(51) Int. Cl.: B60H 1/22

(54) **MODULSYSTEM FÜR EIN HEIZGERÄT**
MODULE SYSTEM FOR A HEATER
SYSTEME MODULAIRE POUR APPAREIL DE CHAUFFAGE

(30) Priorität: 20.02.2001 DE 10107909
(43) Veröffentlichungstag der Anmeldung: 26.11.2003
(73) Patentinhaber: J. Eberspächer GmbH & Co. KG, 73703 Esslingen (DE)
(72) Erfinder: HUMBURG, Michael, 73035 Göppingen (DE); EPPLER, Hermann, 72336 Balingen (DE)
(74) Vertreter: Thallinger, Wolfgang
(86) Internationale Anmeldenummer: PCT/EP2002/001767
(87) Internationale Veröffentlichungsnummer: WO 2002/066273

(56) Entgegenhaltungen:
- DE-A- 19 502 082
- DE-C- 19 546 262

## Beschreibung

Die Erfindung betrifft ein Modulsystem für ein Heizgerät, insbesondere für ein mit Flüssigbrennstoff betriebenes Wasser- oder Luftheizgerät eines Kraftfahrzeugs in Form eines Zuheizers oder einer Standheizung.

Heizgeräte, insbesondere Zusatzheizer und/oder Standheizungen bei Kraftfahrzeugen, müssen so gestaltet sein, daß sie bei unterschiedlichen Bauraumverhältnissen verwendbar sind. Dementsprechend weisen Heizgeräte dieser Art einen hinsichtlich Form und Abmessungen sehr kompakten Aufbau auf. Darüber hinaus ist es von Vorteil, wenn die Anschlußmöglichkeiten des Heizgerätes und seine Funktionen flexibel gestaltet sind, um auch hier das Heizgerät an die jeweilige Einbausituation und an spezielle Kundenwünsche anpassen zu können. Darüber hinaus soll das Heizgerät eine hohe Leistung sowie einen hohen Wirkungsgrad aufweisen.

Eine individuelle Anpassung des Heizgeräts an die jeweilige Einbausituation ist sehr aufwendig und teuer. Ein Kompromiss kann darin gesehen werden, verschiedene Modelle mit unterschiedlichen Formen und Abmessungen bereitzustellen, wobei dann die eine oder andere Variante für die jeweilige Einbausituation mehr oder weniger geeignet ist. Aber auch die Herstellung verschiedener Varianten ist vergleichsweise teuer.

DE-A-195 02 082 offenbart ein Fahrzeugheizgerät, das durch Aufsetzen eines Anbaumoduls und Vorsehen eines Zusatzsteuergeräts in ein motorunabhängiges Standheizgerät umfunktionierbar ist.

Die vorliegende Erfindung beschäftigt sich mit dem Problem, eine preiswerte Möglichkeit zur Bereitstellung verschiedener Heizgeräte-Varianten aufzuzeigen.

Dieses Problem wird erfindungsgemäß durch ein Modulsystem mit den Merkmalen des Anspruchs 1 gelöst.

Die Erfindung beruht auf dem allgemeinen Gedanken, für die Ausbildung von Heizgerätevarianten ein Modulsystem nach dem Baukastenprinzip auszubilden, das ein gleichbleibendes Basismodul aufweist, an das verschiedene Anbaumodule und verschiedene Luftversorgungsmodule anschließbar sind, die unterschiedlich miteinander kombinierbar sind. Auf diese Weise können mehrere, zumindest jedoch zwei verschiedene Heizgeräte-Varianten zusammengebaut werden. Da die verschiedenen Heizgeräte-Varianten jeweils auf demselben Baismodul aufbauen, das wesentliche und insbesondere in der Entwicklung teure Komponenten, wie z.B. Brennkammer und Wärmetauscher, enthält, können die Kosten der Variantenbildung erheblich reduziert werden. Mit dem erfindungsgemäßen Modulsystem lassen sich zumindest zwei Heizgeräte-Grundtypen ausbilden. Der erste Grundtyp umfaßt ein erstes Luftversorgungsmodul, das im an das Basismodul angebauten Zustand in Achsrichtung im wesentlichen deckungsgleich zum Basismodul ausgebildet ist. Des weiteren dient zur Ausbildung des ersten Grundtyps ein erstes Anbaumodul, das relativ flach ausgebildet ist und Aussparungen aufweist, durch die im an das Basismodul angebauten Zustand Wärmetauscheranschlüsse, die den Wärmetauscher des Basismoduls mit einem Wärmetauschmedium versorgen (Zuführung und Abführung), von außen zugänglich sind. Insgesamt ergibt sich somit eine kompakte Bauform mit geringer Höhe. Insbesondere ist die axiale Länge dieses ersten Grundtyps größer als seine Höhe. Dieser langgestreckte Heizgeräte-Grundtyp eignet sich in besonderer Weise zur Ausbildung eines Zuheizers, der serienmäßig in Kraftfahrzeuge eingebaut werden kann.

Ein zweiter Heizgerätegrundtyp wird dadurch gebildet, daß ein zweites Luftversorgungsmodul und ein zweites Anbaumodul an das Basismodul angeschlossen werden. Das zweite Anbaumodul umgibt im an das Basismodul angebauten Zustand die vorgenannten Wärmetauscheranschlüsse vollständig und nimmt diese quasi in sich auf. Das zweite Luftversorgungsmodul ist im an das Basismodul angebauten Zustand in Achsrichtung im wesentlichen deckungsgleich zum Basismodul und zum daran angebauten zweiten Anbaumodul ausgebildet. Dieser zweite Grundtyp weist demnach eine größere Höhe auf als der vorgenannte erste Grundtyp. Vorzugsweise ist dafür seine axiale Länge deutlich kürzer als die des vorgenannten ersten Grundtyps. Insbesondere ist beim zweiten Grundtyp seine Höhe größer als seine axiale Länge. Dementsprechend kann der zweite Grundtyp besonders kompakt ausgebildet sein und eignet sich daher in besondere Weise zur Ausbildung als Standheizung, die auch nachträglich in einem Motorraum montierbar ist.

Vorzugsweise sind die Komponenten des erfindungsgemäßen Modulsystems so gewählt, daß für das Luftversorgungsmodul eine erste Variante vorgesehen ist, bei der das Luftversorgungsmodul ein Gebläse enthält, das Frischluft ansaugt und/oder zur Brennkammer antreibt, wobei für das Luftversorgungsmodul außerdem eine zweite Variante vorgesehen ist, bei der das Luftversorgungsmodul zum Anschließen an ein externes Gebläse ausgebildet ist. Hierdurch können für jeden Grundtyp Heizgerätevarianten zusammengestellt werden, die entweder das zur Frischluftversorgung erforderliche Gebläse integriert enthalten oder an ein externes, separat angeordnetes Gebläse anschließbar sind. Diese Varianten ermöglichen eine zusätzliche Anpassung an die gegebenen Raumverhältnisse.

Bei einer besondere Weiterbildung kann das Gebläse in der ersten Variante des ersten Luftversorgungsmoduls so angeordnet sein, daß im an das Basismodul angebauten Zustand eine Rotationsachse des Gebläses im wesentlichen senkrecht zur Längsachse des Basismodul steht. Hierdurch ergibt sich eine relativ langgestreckte Bauweise für das komplettierte Heizgerät.

Ebenso ist eine Ausführungsform möglich, bei der das Gebläse in der ersten Variante des zweiten Luftversorgungsmoduls so angeordnet ist, daß im an das Basismodul angebauten Zustand eine Rotationsachse des Gebläses im wesentlichen parallel zur Längsachse des Basismoduls verläuft. Bei dieser Ausführungsform baut das zweite Luftversorgungsmodul deutlich höher als das erste Luftversorgungsmodul und kann aufgrund der Anordnung des Gebläses vergleichsweise flach ausgebildet werden, d.h. die Erstreckung des zweiten Luftversorgungsmoduls in Achsrichtung des Basismoduls ist kleiner, insbesonder erheblich kleiner, als die quer dazu gemessene Höhe und Breite.

Ein weiterer Integrationsgrad kann dadurch erreicht werden, daß das zweite Anbaumodul eine Brennstoffpumpe und/oder eine Wärmetauschermediumpumpe aufweist. Neben der Integration des Steuergeräts bzw. der Aufnahme des Steuergeräts werden dem zweiten Anbaumodul somit zusätzliche Funktionen zugeordnet.

Um bei einer besonders kompakten Bauweise eine hinreichende Leistung sowie akzeptable Emissionswerte erzielen zu können, wird für eine Weiterbildung vorgeschlagen, die Brennkammer so auszugestalten, daß sie im Bereich der ersten Schnittstelle, über die das jeweilige Luftversorgungsmodul an das Basismodul anschließbar ist, axial vorsteht und bei am Basismodul angebautem Luftversorgungsmodul in dieses hineinragt, wobei das Luftversorugngsmodul eine entsprechende Ausnehmung enthält. Durch diese Maßnahme baut die Brennkammer in axialer Richtung länger als der diese umhüllende Wärmetauscher. Die vergrößerte Baulänge der Brennkammer ermöglicht eine schadstoffarme Verbrennung, während der entsprechend gestaltete Wärmetauscher der Brennkammer eine maximale Heizleistung entzieht. Vorzugsweise ist die im Luftversorgungsmodul angeordnete Ausnehmung innerhalb der Frischluftzuführung positioniert, wodurch sich für den axial vorstehenden Bereich der Brennkammer eine hinreichende Kühlung erzielen läßt.

Eine weitere vorteilhafte Ausführungsform ergibt dann, wenn ein Glühstutzen mit Glühstift im Bereich der ersten Schnittstelle axial vorsteht und bei am Basismodul angebauten Luftversorgungsmodul in dieses hineinragt, wobei das Luftversorgungsmodul innerhalb der Frischluftzuführung eine entsprechende Ausnehmung enthält. Bei dieser Bauweise befindet sich der Glühstutzen mit Glühstift somit innerhalb der Frischluftzuführung und dadurch in einem Bereich mit einem relativen Überdruck, so daß die Halterung des Glühstutzens keine zusätzliche Abdichtfunktion erfüllen muß und dadurch relativ preiswert gestaltet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Explosionsdarstellung mehrerer Komponenten des erfindungsgemäßen Modulsystems,
- Fig. 2: eine perspektivische Ansicht auf ein zusammengebautes Heizgerät gemäß einem ersten Grundtyp,
- Fig. 3: ein zusammengebautes Heizgerät gemäß einem zweiten Grundtyp bei einer ersten Variante und
- Fig. 4: eine perspektivische Ansicht auf ein Heizgerät gemäß dem zweiten Grundtyp bei einer zweiten Variante.

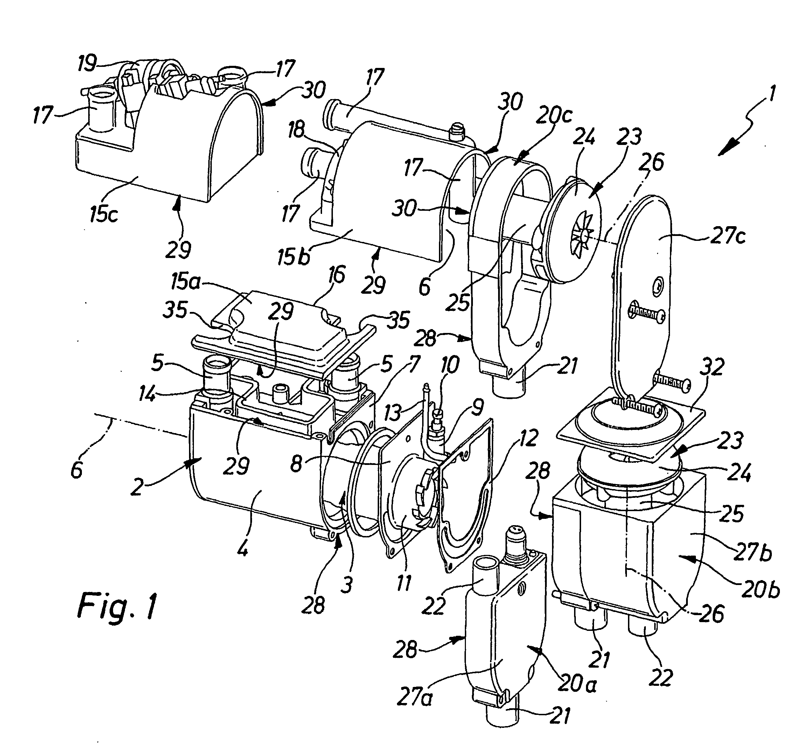

Entsprechend Fig. 1 weist ein erfindungsgemäßes Modulsystem 1 ein Basismodul 2 auf, das eine Brennkammer 3 aufweist, die von einem Wärmetauscher 4 umhüllt ist, der dabei gleichzeitig das Gehäuse des Basismoduls 2 bildet. Der Wärmetauscher 4 ist über zwei Wärmetauscheranschlüsse 5 (Eintritt und Austritt) an einen Heizkreis anschließbar. Vorzugsweise wird als Wärmeübertragungsmedium eine Flüssigkeit, insbesondere Wasser, verwendet. Die Wärmetauscheranschlüsse 5 sind hier als vorstehende Anschlußstutzen ausgebildet; ebenso ist es möglich, die Wärmetauscheranschlüsse 5 als Anschlußöffnungen auszubilden, in die entsprechende Stutzen einsteckbar sind.

Die Brennkammer 3 ist im wesentlichen zylindrisch ausgebildet, dementsprechend weist auch der Wärmetauscher 4 zumindest innen eine zylindrische Form auf, so daß das Basismodul 2 eine Längsachse 6 aufweist.

An einer axialen Stirnseite 7 des Basismoduls 2 ist eine Halteplatte 8 befestigbar, die zur Positionierung der Brennkammer 3 im Wärmetauscher 4 dient. An dieser Halteplatte 8 ist außerdem ein Glühstutzen 9 mit einem Glühstift 10 gehaltert. Des weiteren steht ein Abschnitt 11 der Brennkammer 3 in axialer Richtung von dieser Halteplatte 8 ab. Eine Brennstoffzuführungsleitung ist mit 13 bezeichnet. Für die Montage ist außerdem eine Dichtung 12 erforderlich.

Die Anschlußstutzen 5 des Basimoduls 2 bzw. des Wärmetauschers 4 sind parallel zueinander ausgerichtet und stehen an einer Längsseite 14 des Basismoduls 2 von diesem ab. Diese Längsseite 14 erstreckt sich im wesentlichen in einer Ebene, die parallel zur Längsachse 6 verläuft.

Das Modulsystem 1 weist außerdem mehrere, hier drei, Anbaumodule 15a,15b und 15c auf, die jeweils als Abdeckung für eine nicht gezeigte Heizgerätesteuerung dienen. Dabei kann diese Heizgerätesteuerung bereits in diese Anbaumodule 15 integriert sein. Ebenso ist es möglich, die jeweilige Heizgerätesteuerung am Basismodul 2 anzubringen, um diese dann mit der Montage des jeweiligen Anbaumoduls 15 abzudecken.

Das Anbaumodul 15a bildet dabei ein erstes Anbaumodul 15a, das vergleichsweise flach ausgebildet ist, derart, daß es im montierten Zustand nicht über die Anschlußstutzen 5 des Basismoduls 2 vorsteht; vielmehr stehen die Anschlußstutzen 5 über das montierte erste Anbaumodul 15a vor. Dieses flache erste Anbaumodul 15a weist eine Ausstülpung 16 auf, die an der dem Basismodul 2 zugewandten Innenseite eine Aufnahme für das vorgenannte Heizungssteuergerät bildet. Außerdem besitzt das erste Anbaumodul 15a für jeden Wärmetauscheranschluß 5 eine Aussparung 35, welche im montierten Zustand den jeweiligen Wärmetauscheranschluß 5 von drei Seiten umgibt. Die Wärmtauscheranschlüsse 5 sind dadurch bei montiertem ersten Anbaumodul 15a von außen gut zugänglich.

Im Unterschied dazu bilden die Anbaumodule 15b und 15c zwei verschiedene Varianten eines zweiten Anbaumoduls 15b,15c, die sich hinsichtlich ihrer Höhe deutlich vom ersten Anbaumodul 15a unterscheiden, insbesondere sind diese zweiten Anbaumodule 15b und 15c nicht flach ausgebildet. Im montierten Zustand überdecken die zweiten Anbaumoduls 15b und 15c neben der nicht gezeigten Heizgerätesteuerung außerdem die Anschlüsse 5 des Basismoduls 2. Im Inneren sind diese Anschlüsse 5 dann mit korrespondierden Anschlüssen 17 verbunden, die am jeweiligen zweiten Anbaumodul 15b und 15c ausgebildet sind. Um eine einfache Montage gewährleisten zu können, sind die miteinander zu verbindenden Anschlüsse 5 und 17 vorzugsweise jeweils als Steckverbindungen ausgebildet, die durch einen einfachen Aufsteckvorgang eine abgedichtete Verbindung gewährleisten.

Zur Ausbildung einer ersten Variante ist in das eine zweite Anbaumodul 15b eine Wärmetauschermediumpumpe 18 integriert, die üblicherweise auch als "Wasserpumpe" bezeichnet wird. Beim Montieren dieses zweiten Anbaumoduls 15b wird der jeweilige Anschluß 5 des Wärmetauschers 4 vorzugsweise über eine Steckverbindung mit dem jeweiligen Eingang bzw. Ausgang der Pumpe 18 verbunden.

Zur Ausbildung einer zweiten Variante weist das andere hier dargestellte zweite Anbaumodul 15c an seiner Oberseite eine Brennstoffpumpe 19 auf, mit der die Brennstoffversorgung eines nicht gezeigten Brenners realisiert wird. Durch die Integration der Brennstoffpumpe 19 bzw. der Wasserpumpe 28 in das jeweilige zweite Anbaumodul 15b,15c ergeben sich leicht montierbare Modul-Einheiten, die einen kompakten Aufbau für das jeweilige Heizgerät ermöglicht.

Das erfindungsgemäße Modulsystem 1 weist außerdem mehrere, hier drei, Luftversorgungsmodule 20a,20b und 20c auf, die jeweils einen Frischlufteingang 22 und einen Abgasausgang 21 aufweisen. Außerdem enthält jedes dieser Luftversorgungsmodule 20 in seinem Inneren eine Abgasführung, die im montierten Zustand das vom Wärmetauscher 4 kommende, abgekühlte Abgas einem nach außen geführten Abgasanschluß zuführen, der hier den Abgasausgang 21 des jeweiligen Luftversorgungsmoduls 20 bildet. Der Frischlufteingang 22 ist bei den Ausführungsformen 20a und 20b als nach außen geführter Frischluftanschluß ausgebildet, während er bei der Ausführungsform 20c im Inneren des Luftversorgungsmoduls 20c verläuft und die Frischluft beispielsweise von einer anderen Stelle des jeweiligen Heizgeräts, z.B. über bzw. durch das jeweilige zweite Anbaumodul 15b,15c erhält.

Auch bei diesen Luftversorgungsmodulen 20 sind wenigstens zwei verschiedene Varianten vorgesehen. Dementsprechend bilden die Luftversorgungsmodule 20a und 20b jeweils ein erstes Luftversorgungsmodul 20a bzw. 20b, dessen Querschnitt (quer zur Längsachse 6) jeweils im wesentlichen deckungsgleich zum Querschnitt des Basismoduls 2 ausgebildet ist. Im Unterschied dazu bildet die Ausführungsform 20c ein zweites Luftversorgungsmodul 20c, dessen Querschnitt im wesentlichen dem Querschnitt des Basismoduls 2 zuzüglich dem Querschnitt eines der zweiten Anbaumodule 15b oder 15c entspricht.

Das erste Luftversorgungsmodul 20a ist relativ flach ausgebildet, d.h., seine axiale Länge ist hier deutlich kleiner als seine Breite und als seine Höhe. Dieses spezielle erste Luftversorgungsmodul 20a ist zum Anschluß an ein externes, hier nicht gezeigtes Gebläse ausgebildet, das die zum Betrieb des jeweiligen Heizgeräts erforderliche Luftströmung erzeugt.

Im Unterschied dazu sind das andere erste Luftversorgungsmodul 20b sowie das zweite Luftversorgungsmodul 20c jeweils mit einem Gebläse 23 ausgestattet, das beispielsweise einen Radialverdichter 24 sowie einen Gebläsemotor 25 umfaßt.

Zweckmäßig wird das Gebläse 23 beim ersten Luftversorgungsmodul 20b so montiert, daß seine Rotationsachse 26 im wesentlichen senkrecht zur Längsachse 6 verläuft. Im Unterschied dazu wird das Gebläse 23 beim zweiten Luftversorgungsmodul 20c zweckmäßig so montiert, daß seine Rotationsachse 26 im wesentlichen parallel zur Längsachse 6 verläuft. Dementsprechend ergibt für das erste Luftversorgungsmodul 20b eine etwa würfel- oder kugelförmige Kontur, bei der die Länge, Breite und Höhe etwa gleich groß sind. Im Unterschied dazu ist beim zweiten Luftversorgungsmodul 20c eine extrem flache Bauweise möglich, bei der die axiale Erstreckung des zweiten Luftversorgungsmoduls 20c deutlich kleiner ist als die Breite und die Höhe.. Dabei kann der Gebläsemotor 25 zum jeweiligen zweiten Anbaumodul 15b bzw. 15c vom zweiten Luftversorgungsmodul 20c abstehen und im montierten Zustand in eine entsprechende, im jeweiligen zweiten Anbaumodul 15b,15c ausgebildete Aussparung hineinragen. Diese Aussparung ist beim zweiten Anbaumodul 15b mit 36 bezeichnet.

Die vom Basismodul 2 abgewandten axialen Stirnseiten der Luftversorgungsmodule 20 sind jeweils mit einem entsprechenden Deckel 27a,27b und 27c verschließbar. Außerdem ist zum Verschließen des mit dem Gebläse 23 ausgestatteten ersten Luftversorgungsmoduls 20b ein weiterer Deckel 32 vorgesehen.

Nach der Montage der Halteplatte 8 am Basismodul 2 steht der axiale Endabschnitt 11 der Brennkammer 3 axial vom Basismodul 2 ab. Ebenso ist der Glühstutzen 9 mit Glühstift 10 auf dieser vom Wärmetauscher 4 abgewandten Seite der Halteplatte 8 angeordnet. Bei der Montage des jeweiligen Luftversorgungsmoduls 20 dringt dann dieser Axialabschnitt 11 der Brennkammer 3 bzw. dringen Glühstutzen 9 und Glühstift 10 in das jeweilige Luftversorgungsmodul 20 ein. Zu diesem Zweck ist im jeweiligen Luftversorgungsmodul 20 zumindest eine entsprechende Ausnehmung vorgesehen. Durch diese Bauweise kann einerseits die Länge der Brennkammer 3 größer dimensioniert werden, als die axiale Länge des zugehörigen Wärmetauschers 4, um beispielsweise eine schadstoffarme Verbrennung zu realisieren. Die zugehörige Ausnehmung im jeweiligen Luftversorgungsmodul 20 ist zweckmäßig ein Bestandteil der Frischluftzuführung innerhalb dieses Luftversorgungsmoduls 20. Hierdurch befindet sich der vorstehende Brennkammerabschnitt 11 in einem relativ intensiv mit kühler Frischluft beaufschlagten Bereich, so daß eine hinreichende Kühlung des Brennkammerabschnitts 11 realisierbar ist. Des weiteren befinden sich Glühstutzen 9 und Glühstift 10 in einem Bereich mit relativem Überdruck, so daß eine Halterung des Glühstifts 10 bzw. des Glühstutzens 9 keine zusätzlichen, aufwendigen Dichtfunktionen erfüllen muß.

Um eines der Luftversorgungsmodule 20 am Basismodul 2 anzubringen, ist eine erste Schnittstelle 28 vorgesehen, die eine Befestigung der beiden Module 2 und 20 aneinander ermöglicht. Des weiteren erfolgt über diese erste Schnittstelle 28 eine funktionale Kopplung der beiden Module 2 und 20 bzw. deren Komponenten miteinander. Beispielsweise wird durch das jeweilige Luftversorgungsmodul 20 die Frischluft der Brennkammer 3 des Basismoduls 2 zugeführt. Ebenso wird das aus dem Wärmetauscher 4 austretende Abgas einer entsprechenden Abgasleitung im Frischluftversorgungsmodul 20 zugeführt.

Zur Anbindung, also zur Befestigung und zur mechanischen sowie funktionalen Kopplung, der einzelnen Anbaumodule 15 am Basismodul 2 ist eine zweite Schnittstelle 29 vorgesehen. Die funktionale Kopplung beinhaltet beispielsweise bei den zweiten Anbaumodulen 15b und 15c die weiter oben genannten Steckverbindungen, mit denen die Anschlüsse 5 des Wärmetauschers 4 dicht mit den Anschlüssen 17 der zweiten Anbaumodule 15b und 15c verbunden werden.

Des weiteren ist zwischen den zweiten Anbaumodulen 15b und 15c und dem zweiten Luftversorgungsmodul 20c eine dritte Schnittstelle 30 ausgebildet, über die beispielsweise das zweite Luftversorgungsmodul 20c mit Frischluft versorgt wird. Vorzugsweise liegen die erste Schnittstelle 28 und die dritte Schnittstelle 30 in einer gemeinsamen Ebene, um die Anbindung des zweiten Luftversorgungsmoduls 20c an das Basismodul 2 und an das jeweilige zweite Anbaumodul 15b bzw. 15c zu vereinfachen.

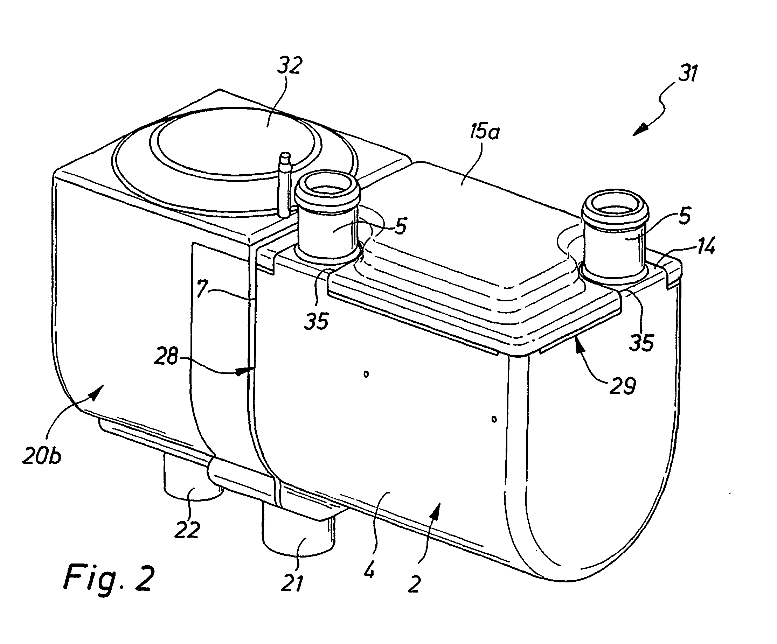

Fig. 2 zeigt einen ersten Grundtyp eines Heizgeräts 31, das mit Hilfe des erfindungsgemäßen Modulsystems 1 zusammengebaut werden kann. Hierbei wird das Basismodul 2 mit einem der ersten Luftversorgungsmodule 20a und 20b und mit dem ersten Anbaumodul 15a kombiniert. In Fig. 2 ist eine Ausführungsform mit integriertem Gebläse 23 dargestellt, also eine Kombination mit dem ersten Luftversorgungsmodul 20b.

Das hier gezeigte Heizgerät 31 zeichnet sich durch eine langgestreckte, kompakte Bauform aus, deren axiale Länge größer ist als deren Breite und Höhe. Dieser erste Heizgeräte-Grundtyp eignet sich in besonderer Weise für einen serienmäßigen Einbau als Zusatzheizer. In Fig. 2 wird außerdem deutlich, daß im montierten Zustand die Anschlußstutzen 5 des Basismoduls bzw. des Wärmetauschers 4 an der Längsseite 14 durch die Aussparungen 35 hindurch über das montierte erste Anbaumodul 15a vorstehen und von außen frei zugänglich sind.

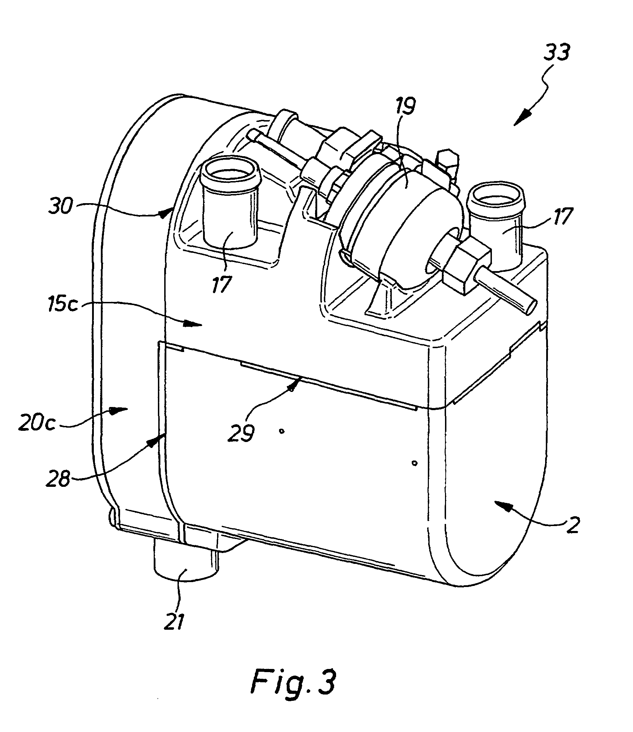

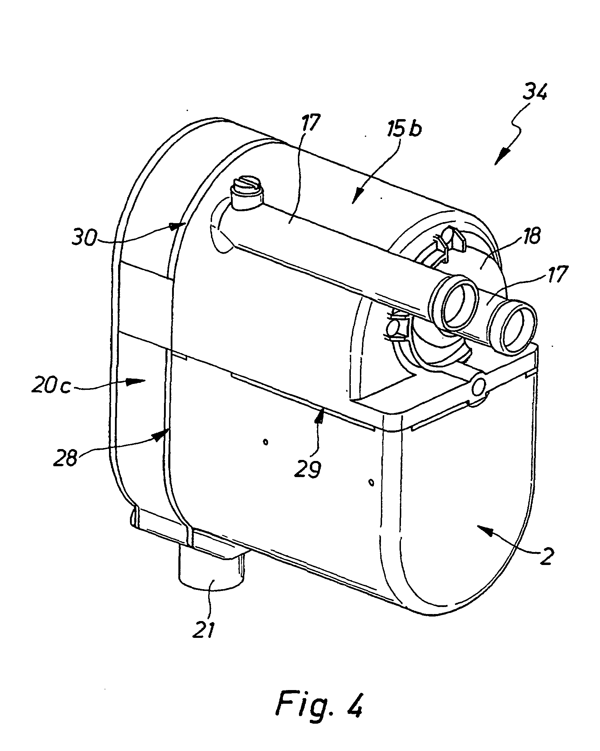

Die Fig. 3 und 4 zeigen verschiedene Varianten eines zweiten Grundtyps eines Heizgeräts 33 bzw. 34, das sich durch andere Kombinationen der Komponenten bzw. der einzelnen Module 2,15,20 realisieren läßt. Entsprechend Fig. 3 sind zur Ausbildung des Heizgeräts 33 das Basismodul 2, das zweite Luftversorgungsmodul 20c und die zweite Variante (15c) der zweiten Anbaumodule 15b,15c miteinander kombiniert. Dieses Heizgerät 33 ist daher mit der Brennstoffpumpe 19 ausgerüstet.

Im Unterschied dazu ist zur Ausbildung des Heizgeräts 34 gemäß Fig. 4 das Basismodul 2 wieder mit dem zweiten Luftzuführungsmodul 20c, jedoch in diesem Fall mit der ersten Varianten (15b) der zweiten Anbaumodule 15b,15c kombiniert. Dementsprechend ist in dieses Heizgerät 34 die Wasserpumpe 18 integriert.

Der zweite Heizgeräte-Grundtyp der Fig. 3 und 4 zeichnet sich durch eine kompakte Bauform aus, deren Höhe etwa der axialen Länge entspricht, wobei die Höhe in der Regel größer ist als die Breite des Heizgeräts 33,34. Insbesondere kann die Höhe des Heizgeräts 33,34 größer gewählt sein, als seine axiale Länge. Durch diese Bauform erhält das Heizgerät 33 und 34 einen besonders geringen Rauminhalt, wodurch sich dieser zweite Grundtyp in besonderer Weise zur Ausbildung als Standheizung eignet, die bei sehr unterschiedlichen Einbausituationen verwendbar auch nachträglich in den Motorraum eines Fahrzeugs einbaubar ist.

Ein entscheidender Vorteil des erfindungsgemäßen Modulsystems 1 kann darin gesehen werden, daß zur Ausbildung verschiedener Heizgeräte 31,33,34, von denen hier lediglich drei verschiedene Varianten in den Fig. 2 bis 4 dargestellt sind, einzelne Module, insbesondere das Basismodul 2, bei mehreren verschiedenen Varianten verwendbar sind, so daß die Herstellungskosten trotz einer großen Vielfalt an Varianten relativ gering sind. Dies gilt um so mehr, als daß in das bei allen Varianten gleich verwendete Basismodul 2 gerade diejenigen Komponenten integriert sind, insbesondere Wärmetauscher 4 und Brennkammer 3, die relativ hohe Entwicklungskosten aufweisen. Hierdurch ergeben sich sehr hohe Stückzahlen, welche die Entwicklungskosten rasch amortisieren.

## Patentansprüche

1. Modulsystem für ein Heizgerät, insbesondere für ein mit Flüssigbrennstoff betriebenes Wasser- oder Luftheizgerät eines Kraftfahrzeugs in Form eines Zusatzheizers oder einer Standheizung,
- mit mindestens zwei verschiedenen Anbaumodulen (15a,151b,15c), die jeweils zumindest eine Abdeckung für eine Heizgerätesteuerung bilden,
- mit mindestens zwei verschiedenen Luftversorgungsmodulen (20a,20b,20c), die jeweils einen Frischlufteingang (22) und einen Abgasausgang (21) aufweisen,
- mit einem Basismodul (2), das eine Brennkammer (3) und einen diesen ummantelnden Wärmetauscher (4) mit zwei Wärmetauscheranschlüssen (5) aufweist,
- mit folgenden Merkmalen:
- an das Basismodul (2) ist an einer axialen Stirnseite (7) über eine erste Schnittstelle (28) eines der Luftversorgungsmodule (20a,20b,20c) anschließbar,
- an das Basismodul (2) ist an einer Längsseite (14) über eine zweite Schnittstelle (29) eines der Anbaumodule (15a,15b,15c) anschließbar,
- die Wärmetauscheranschlüsse (5) sind an der Längsseite (14) angeordnet,
- die Heizgerätesteuerung ist im Bereich der zweiten Schnittstelle (29) angeordnet und durch das jeweilige an das Basismodul (2) angebaute Anbaumodul (15a,15b,15c) abgedeckt,
- ein erstes Luftversorgungsmodul (20a,20b) ist im an das Basismodul (2) angebauten Zustand in Achsrichtung im wesentlichen deckungsgleich zum Basismodul (2) ausgebildet,
- ein erstes Anbaumodul (15a) ist relativ flach ausgebildet und weist für jeden Wärmetauscheranschluß (5) eine Aussparung (35) auf, die im an das Basismodul (2) angebauten Zustand den jeweiligen Wärmetauscheranschluß (5) zumindest teilweise seitlich einfaßt, wobei die Wärmetauscheranschlüsse (5) von außen zugänglich sind,
- ein zweites Anbaumodul (15b,15c) umschließt im an das Basismodul (2) angebauten Zustand die Wärmetauscheranschlüsse (5) vollständig,
- ein zweites Luftversorgungsmodul (20c) ist im an das Basismodul (2) angebauten Zustand in Achsrichtung im wesentlichen deckungsgleich zum Basismodul (2) und zum daran angebauten zweiten Anbaumodul (15b,15c) ausgebildet,
- zwischen zweitem Anbaumodul (15b,15c) und zweitem Luftversorgungsmodul (20c) ist eine dritte Schnittstelle (30) ausgebildet, die im an das Basismodul (2) angebauten Zustand benachbart zur ersten Schnittstelle (28) angeordnet ist und über die das zweite Anbaumodul (15b,15c) und das zweite Luftversorgungsmodul (20c) aneinander anschließbar sind.

2. Modulsystem nach Anspruch 1,
**dadurch gekennzeichnet,**
**daß** das Luftversorgungsmodul in einer ersten Variante (20b,20c) vorgesehen ist, bei der das Luftversorgungsmodul (20b,20c) ein Gebläse (23) enthält, das Frischluft ansaugt und/oder zur Brennkammer (3) antreibt, und
**daß** das Luftversorgungsmodul in einer zweiten Variante (20a) vorgesehen ist, bei der Luftversorgungsmodul (20a) zum Anschließen an ein externes Gebläse ausgebildet ist.

3. Modulsystem nach Anspruch 2,
**dadurch gekennzeichnet,**
**daß** das Gebläse (23) in der ersten Variante des ersten Luftversorgungsmoduls (20b) so angeordnet ist, daß im an das Basismodul (2) angebauten Zustand eine Rotationsachse (26) des Gebläses (23) im wesentlichen senkrecht zur Längsachse (6) des Basismoduls (2) verläuft.

4. Modulsystem nach Anspruch 2 oder 3,
**dadurch gekennzeichnet,**
**daß** das Gebläse (23) in der ersten Variante des zweiten Luftversorgungsmoduls (20c) so angeordnet ist, daß im an das Basismodul (2) angebauten Zustand eine Rotationsachse (26) des Gebläses (23) im wesentlichen parallel zur Längsachse (6) des Basismoduls (2) verläuft.

5. Modulsystem nach einem der Ansprüche 1 bis 4,
**dadurch gekennzeichnet,**
**daß** das zweite Anbaumodul (15b,15c) eine Brennstoffpumpe (19) und/oder eine Wärmetauschermediumpumpe (18) aufweist.

6. Modulsystem nach einem der Ansprüche 1 bis 5,
**dadurch gekennzeichnet,**
**daß** das zweite Anbaumodul (15b,15c) zwei außenliegende Anschlüsse (17) für ein Wärmetauschermedium aufweist, die im an das Basismodul (2) angebauten Zustand im Inneren des zweiten Anbaumoduls (15b,15c) jeweils mit einem der Wärmetauscheranschlüsse (5) des Basismoduls (2) kommunizieren, wobei die Verbindungen zwischen den Anschlüssen (5,17) als Steckverbindungen ausgebildet sind.

7. Modulsystem nach einem der Ansprüche 1 bis 6,
**dadurch gekennzeichnet,**
**daß** die Wärmetauscheranschlüsse (5) als parallel zueinander ausgerichtete Anschlußöffnungen oder als parallel zueinander verlaufende und im wesentlichen senkrecht von der Längsseite (14) abstehende Anschlußstutzen ausgebildet sind.

8. Modulsystem nach Anspruch 7,
**dadurch gekennzeichnet,**
**daß** das erste Anbaumodul (15a) so flach ausgebildet ist, daß im an das Basismodul (2) angebauten Zustand die Wärmetauscheranschlüsse (5) über das erste Anbaumodul (15a) vorstehen.

9. Modulsystem nach einem der Ansprüche 1 bis 8,
**dadurch gekennzeichnet,**
**daß** die erste Schnittstelle (28) und die dritte Schnittstelle (30) in einer gemeinsamen Ebene angeordnet sind.

10. Modulsystem nach einem der Ansprüche 1 bis 9,
**dadurch gekennzeichnet,**
**daß** die Brennkammer (3) im Bereich der ersten Schnittstelle (28) axial vorsteht, derart, daß sie bei am Basismodul (2) angebautem Luftversorgungsmodul (20a,20b,20c) in dieses hineinragt, wobei das Luftversorgungsmodul (20a,20b,20c) eine entsprechende Ausnehmung enthält.

11. Modulsystem nach einem der Ansprüche 1 bis 10,
**dadurch gekennzeichnet,**
**daß** ein Glühstutzen (9) mit Glühstift (10) im Bereich der ersten Schnittstelle (28) axial vorsteht, derart, daß er bei am Basismodul (2) angebautem Luftversorgungsmodul (20a,20b,20c) in dieses hineinragt, wobei das Luftversorgungsmodul (20a,20b,20c) innerhalb seiner Frischluftzuführung eine entsprechende Ausnehmung enthält.

12. Mit einem Modulsystem (1) nach einem der Ansprüche 1 bis 11 herstellbares Heizgerät (31),
**dadurch gekennzeichnet,**
**daß** das erste Luftversorgungsmodul (20a,20b) und das erste Anbaumodul (15a) an das Basismodul (2) angebaut sind.

13. Mit einem Modulsystem (1) nach einem der Ansprüche 1 bis 11 herstellbares Heizgerät (31),
**dadurch gekennzeichnet,**
**daß** das zweite Luftversorgungsmodul (20c) und das zweite Anbaumodul (15b,15c) an das Basismodul (2) angebaut sind.

## Claims

1. Module system for a heater, in particular for a water heater or air heater, operated with liquid fuel, of a motor vehicle in the form of a supplementary heater or a stationary-vehicle-type heater,
- having at least two different built-on modules (15a, 15b, 15c) which each form at least one cover for a heater controller,
- having at least two different air supply modules (20a, 20b, 20c) which each have a fresh air inlet (22) and an exhaust outlet (21),
- having a basic module (2) which has a combustion chamber (3) and a heat exchanger (4) which surrounds the latter and has two heat exchanger terminals (5),
- having the following features:
- one of the air supply modules (20a, 20b, 20c) can be connected to the basic module (2) on an axial end side (7) via a first interface (28),
- one of the built-on modules (15a, 15b, 15c) can be connected to the basic module (2) on a longitudinal side (14) via a second interface (29),
- the heat exchanger terminals (5) are arranged on the longitudinal side (14),
- the heater controller is arranged in the region of the second interface (29) and is covered by the respective built-on module (15a, 15b, 15c) which is built onto the basic module (2),
- a first air supply module (20a, 20b) is embodied, in the state in which it is built onto the basic module (2), so as to be essentially congruent, in the axial direction, with the basic module (2),
- a first built-on module (15a) is embodied so as to be relatively flat and has, for each heat exchanger connection (5), a cut-out (35) which, in the state in which it is built onto the basic module (2), at least partially laterally encloses the respective heat exchanger connection (5), the heat exchanger terminals (5) being accessible from the outside,
- a second built-on module (15b, 15c) completely surrounds the heat exchanger terminals (5) in the state in which it is built onto the basic module (2),
- a second air supply module (20c) is embodied, in the state in which it is built onto the basic module (2), so as to be essentially congruent, in the axial direction, with the basic module (2) and with the second built-on module (15b, 15c) which is built thereon,
- between the second built-on module (15b, 15c) and second air supply module (20c), a third interface (30) is embodied which, in the state in which it is built onto the basic module (2), is arranged adjacent to the first interface (28) and by means of which the second built-on module (15b, 15c) and the second air supply module (20c) can be connected to one another.

2. Module system according to Claim 1, **characterized in that** the air supply module is provided in a first variant (20b, 20c) in which the air supply module (20b, 20c) contains a blower (23) which sucks in fresh air and/or propels it to the combustion chamber (3), and **in that** the air supply module is provided in a second variant (20a) in which the air supply module (20a) is designed to be connected to an external blower.

3. Module system according to Claim 2, **characterized in that** the blower (23) is arranged, in the first variant of the first air supply module (20b), in such a way that, in the state in which it is built onto the basic module (2), an axis (26) of rotation of the blower (23) extends essentially perpendicularly to the longitudinal axis (6) of the basic module (2).

4. Module system according to Claim 2 or 3, **characterized in that** the blower (23) is arranged in the first variant of the second air supply module (20c) in such a way that, in the state in which it is built onto the basic module (2), an axis (26) of rotation of the blower (23) extends essentially parallel to the longitudinal axis (6) of the basic module (2).

5. Module system according to one of Claims 1 to 4, **characterized in that** the second built-on module (15b, 15c) has a fuel pump (19) and/or a heat exchanger medium pump (18).

6. Module system according to one of Claims 1 to 5, **characterized in that** the second built-on module (15b, 15c) has two external terminals (17) for a heat exchanger medium, which terminals (17) respectively communicate, in the state in which they are built onto the basic module (2), in the interior of the second built-on module (15b, 15c), with one of the heat exchanger terminals (5) of the basic module (2), the connections between the terminals (5, 17) being embodied as plug-type connections.

7. Module system according to one of Claims 1 to 6, **characterized in that** the heat exchanger terminals (5) are embodied as connecting openings which are oriented parallel to one another, or as connectors which extend parallel to one another and protrude essentially perpendicularly from the longitudinal side (14).

8. Module system according to Claim 7, **characterized in that** the first built-on module (15a) is embodied so as to be so flat that, in the state in which it is built onto the basic module (2), the heat exchanger terminals (5) protrude beyond the first built-on module (15a).

9. Module system according to one of Claims 1 to 8, **characterized in that** the first interface (28) and the third interface (30) are arranged in a common plane.

10. Module system according to one of Claims 1 to 9, **characterized in that** the combustion chamber (3) protrudes axially in the region of the first interface (28) in such a way that, when the air supply module (20a, 20b, 20c) is built onto the basic module (2), said combustion chamber (3) projects into said air supply module (20a, 20b, 20c), the air supply module (20a, 20b, 20c) containing a corresponding recess.

11. Module system according to one of Claims 1 to 10, **characterized in that** a sheathed element connector (9) with sheathed-element (10) protrudes axially in the region of the first interface (28) in such a way that, when the air supply module (20a, 20b, 20c) is built onto the basic module (2), said sheathed element connector (9) projects into said air supply module (20a, 20b, 20c), the air supply module (20a, 20b, 20c) containing a corresponding recess inside its fresh air supply.

12. Heater (31) which can be manufactured with a module system (1) according to one of Claims 1 to 11, **characterized in that** the first air supply module (20a, 20b) and the first built-on module (15a) are built onto the basic module (2).

13. Heater (31) which can be manufactured with a module system (1) according to one of Claims 1 to 11, **characterized in that** the second air supply module (20c) and the second built-on module (15b, 15c) are built onto the basic module (2).

## Revendications

1. Système modulaire pour un appareil de chauffage, en particulier pour un appareil de chauffage d'air ou d'eau fonctionnant avec un combustible liquide destiné à une automobile sous forme d'un chauffage complémentaire ou d'un chauffage indépendant,
- avec au moins deux modules rapportés différents (15a, 15b, 15c) formant chacun au moins un recouvrement pour une commande d'appareil de chauffage,
- avec au moins deux modules d'alimentation d'air différents (20a, 20b, 20c) présentant chacun une entrée d'air neuf (22) et une sortie de gaz résiduel (21),
- avec un module de base (2) comportant une chambre de combustion (3) et un échangeur de chaleur (4) à deux branchements d'échangeur de chaleur (5) enveloppant cette dernière,
- avec les caractéristiques suivantes :
- un des modules d'alimentation d'air (20a, 20b, 20c) peut être branché au module de base (2) sur une face frontale axiale (7) par une première interface (28),
- un des modules rapportés (15a, 15b, 15c) peut être branché au module de base (2) sur une face longitudinale (14) par une deuxième interface (29),
- les branchements d'échangeur de chaleur (5) sont disposés sur la face longitudinale (14),
- la commande d'appareil de chauffage est disposée dans la zone de la deuxième interface (29) et recouverte par le module rapporté correspondant (15a, 15b, 15c) rapporté au module de base (2),
- dans son état rapporté au module de base (2), un premier module d'alimentation d'air (20a, 20b) coïncide dans le sens axial pour l'essentiel avec le module de base (2),
- un premier module rapporté (15a) est formé de manière relativement plane et présente pour chaque branchement d'échangeur de chaleur (5) un évidement (35) qui, dans son état rapporté au module de base (2), enferme au moins en partie latéralement chaque branchement d'échangeur de chaleur (5), les branchements d'échangeur de chaleur (5) étant accessibles de l'extérieur,
- à l'état rapporté au module de base (2), un deuxième module rapporté (15b, 15c) enferme entièrement les branchements d'échangeur de chaleur (5),
- dans son état rapporté au module de base (2), un deuxième module d'alimentation d'air (20c) coïncide dans le sens axial pour l'essentiel avec le module de base (2) et le deuxième module rapporté (15b, 15c) qui y est rapporté,
- une troisième interface (30), qui, à l'état rapporté au module de base (2) est juxtaposée à la première interface (28), est formée entre le deuxième module rapporté (15b, 15c) et le deuxième module d'alimentation d'air (20c), permettant le branchement l'un à l'autre du deuxième module rapporté (15b, 15c) et du deuxième module d'alimentation d'air (20c).

2. Système modulaire selon la revendication 1,
**caractérisé en ce**
**que** le module d'alimentation d'air est prévu dans une première variante (20b, 20c), dans laquelle le module d'alimentation d'air (20b, 20c) comprend une ventilation (23) aspirant de l'air neuf et/ou l'entraînant vers la chambre de combustion (3) et en ce que le module d'alimentation d'air est prévu dans une deuxième variante (20a), dans laquelle le module d'alimentation d'air (20a) est formé pour être branché à une ventilation externe.

3. Système modulaire selon la revendication 2,
**caractérisé en ce**
**que** la ventilation (23) de la première variante du premier module d'alimentation d'air (20b) est disposée de sorte qu'à l'état rapporté au module de base (2) un axe de rotation (26) de la ventilation (23) s'étende pour l'essentiel perpendiculairement à l'axe longitudinal (6) du module de base (2).

4. Système modulaire selon la revendication 2 ou 3,
**caractérisé en ce**
**que** la ventilation (23) de la première variante du deuxième module d'alimentation d'air (20c) est disposée de sorte qu'à l'état rapporté au module de base (2) un axe de rotation (26) de la ventilation (23) s'étende pour l'essentiel parallèlement à l'axe longitudinal (6) du module de base (2).

5. Système modulaire selon l'une des revendications 1 à 4,
**caractérisé en ce**
**que** le deuxième module rapporté (15b, 15c) présente une pompe à carburant (19) et/ou une pompe à fluide caloporteur (18).

6. Système modulaire selon l'une des revendications 1 à 5,
**caractérisé en ce**
**que** le deuxième module rapporté (15b, 15c) présente deux branchements extérieurs (17) pour un fluide caloporteur, communiquant chacun à l'état rapporté au module de base (2) à l'intérieur du deuxième module rapporté (15b, 15c) avec un des branchements d'échangeur de chaleur (5) du module de base (2), les communications entre les branchements (5, 17) étant réalisées sous forme enfichable.

7. Système modulaire selon l'une des revendications 1 à 6,
**caractérisé en ce**
**que** les branchements d'échangeur de chaleur (5) sont réalisés sous forme d'ouvertures de branchement parallèles l'une à l'autre ou sous forme de tubulures de branchement parallèles l'une à l'autre et dépassant pour l'essentiel perpendiculairement de la face longitudinale (14).

8. Système modulaire selon la revendication 7,
**caractérisé en ce**
**que** le premier module rapporté (15a) est réalisé sous forme si plate qu'à l'état rapporté au module de base (2), les branchements d'échangeur de chaleur (5) dépassent au-delà du premier module rapporté (15a).

9. Système modulaire selon l'une des revendications 1 à 8,
**caractérisé en ce**
**que** la première interface (28) et la troisième interface (30) sont disposées sur un niveau commun.

10. Système modulaire selon l'une des revendications 1 à 9,
**caractérisé en ce**
**que** la chambre de combustion (3) dépasse dans le sens axial dans la zone de la première interface (28) de sorte qu'à l'état rapporté du module d'alimentation d'air (20a, 20b, 20c) au module de base (2) elle s'étende dans celui-ci, le module d'alimentation d'air (20a, 20b, 20c) comportant alors un creux correspondant.

11. Système modulaire selon l'une des revendications 1 à 10,
**caractérisé en ce**
**qu'**un manchon incandescent (9) avec bougie incandescente (10) dépasse dans le sens axial dans la zone de la première interface (28) de sorte qu'à l'état rapporté du module d'alimentation d'air (20a, 20b, 20c) au module de base (2) il s'étende dans celui-ci, le module d'alimentation d'air (20a, 20b, 20c) comportant alors à l'intérieur de son amenée d'air neuf un creux correspondant.

12. Appareil de chauffage (31) réalisable avec un système modulaire (1) selon l'une des revendications 1 à 11,
**caractérisé en ce**
**que** le premier module d'alimentation d'air (20a, 20b) et le premier module rapporté (15a) sont rapportés au module de base (2).

13. Appareil de chauffage (31) réalisable avec un système modulaire (1) selon l'une des revendications 1 à 11,
**caractérisé en ce**
**que** le deuxième module d'alimentation d'air (20c) et le deuxième module rapporté (15b, 15c) sont rapportés au module de base (2).
